# EUROPEAN PATENT SPECIFICATION

(11) **EP 3 022 357 B1**
(45) Date of publication and mention of the grant of the patent: **16.01.2019**
(21) Application number: 14825900.5
(22) Date of filing: 11.07.2014
(51) Int. Cl.: D21H 11/20, C08B 15/02, C08B 15/04, C08B 15/08, C08L 1/02, D21C 9/00, D21H 11/18

(54) **A METHOD OF PRODUCING OXIDIZED OR MICROFIBRILLATED CELLULOSE**
VERFAHREN ZUR HERSTELLUNG VON OXIDIERTER ODER MIKROFIBRILLIERTER CELLULOSE
PROCÉDÉ DE PRODUCTION DE CELLULOSE OXYDÉE OU MICROFIBRILLAIRE

(30) Priority: 16.07.2013 FI 20135773
(43) Date of publication of application: 25.05.2016
(73) Proprietor: Stora Enso Oyj, 00101 Helsinki (FI)
(72) Inventor: HILTUNEN, Jaakko, FI-02700 Kauniainen (FI); HEISKANEN, Isto, FI-55100 Imatra (FI); SAXELL, Heidi, FI-01360 Vantaa (FI); KAHELIN, Jukka, FI-53950 Lappeenranta (FI); SAHARINEN, Erkki, FI-00710 Helsinki (FI)
(74) Representative: Berggren Oy, Helsinki & Oulu
(86) International application number: PCT/FI2014/050572
(87) International publication number: WO 2015/007953

(56) References cited:
- EP-A1- 1 156 065
- EP-A1- 2 526 922
- EP-A2- 0 226 414
- EP-A2- 1 264 845
- WO-A1-2007/001229
- WO-A1-2011/004284
- WO-A1-2011/088889
- WO-A1-2012/168562
- WO-A1-2012/172170
- WO-A1-2014/147293
- US-A- 4 661 205
- US-A- 5 964 983
- US-B1- 6 716 976
- ISOGAI, A.: 'TEMPO-oxidized cellulose nanofibers'.' NANOSCALE vol. 3, no. 3, 2011, pages 71 - 85, XP055184316

## Description

### Background of the invention

The present invention concerns a method of producing oxidized cellulose. The invention even comprises a method of producing microfibrillated cellulose (MFC) as well as a method of increasing the viscosity of a suspension of a MFC product. In connection with the invention microfibrillated cellulose also covers what is known as nanofibrillated cellulose (NFC).

Microfibrillated cellulose (MFC) is hereby defined as fibrous material comprised of cellulosic fibrils. Fibrils are very thin, usually of a diameter of about 5 to 100 nm, in average about 20 nm, and have a fibre length of about 20 nm to 200 µm although usually of 100 nm to 100 µm. Nanofibrillated cellulose (NFC) is a specific class of MFC with fibre dimensions at the low end of said fibril size range. In the MFC individual microfibrils are partly or totally detached from each other. Fibres that have been fibrillated and which have microfibrils on the surface and microfibrils that are separated and located in a water phase of slurry are included in the definition MFC. MFC has a very large open active surface area, generally in the range of about 1 to 300 m²/g, and is useful for a wide range of end uses, notably in the field of papermaking but also in composites like plastic or rubber, food, pharmaceuticals, home care products, dispersions like paints, etc.

Prior art methods of manufacturing MFC include mechanical disintegration by refining, milling, beating, homogenizing, and fibrillation by e.g. an extruder. These mechanical methods may be enhanced by chemical or chemoenzymatic treatments as a preliminary step.

US patent 4,341,807 describes production of MFC by passing a fibrous suspension repeatedly through a small diameter orifice subjecting the liquid suspension to a pressure drop. The starting suspension contains 0.5 to 10 wt-% of cellulose. The product is a homogenous gel-formed suspension of MFC.

WO 2007/091942 A1 describes a process, in which chemical pulp is first refined, then treated with one or more wood degrading enzymes, and finally homogenized to produce MFC as the final product. The consistency of the pulp is taught to be preferably from 0.4 to 10 %. The advantage is said to be avoidance of clogging in the high-pressure fluidizer or homogenizer.

There are several studies on preparation of MFC with the aid of oxidants, especially with hypochlorite as a primary oxidant and 2,2,6,6-tetramethylpiperidine-1-oxyl (TEMPO) radical as a mediating catalyst. An alkali bromide may be used as a cocatalyst. Examples of such solutions are presented in publications by *e.g.* Saito et al., Biomacromolecules 2007, 8, 2485-2491, Fukuzumi et al., Biomacromolecules 2009, 10, 162-165, and Okita et al., Biomacromolecules 2010, 11, 1696-1700. According to Saito et al., a fibrous slurry of 1 wt-% consistency at pH 10 was oxidized by adding 1.3 to 5.0 mmol NaClO, 0.1 mmol TEMPO, and 1 mmol sodium bromide per 1 g of cellulose, and stirring the mixture at room temperature while adding NaOH. The oxidized cellulose was then agitated to swell the fibres and finally to turn the dispersion highly viscous and transparent. Very similar descriptions are found from Fukuzumi et al. and Okita *et al.* also.

Saito et al. Ind. Eng. Chem.Res. 2007, 46, 773-780 describe TEMPO-mediated oxidation of cellulose and addition of a cationic polymer such as poly(acrylamide) (C-PAM), poly(vinylamine) (PVAm), and poly(amideamine-epichorohydrin) (PAE) for obtaining sheets with improved wet tensile strength.

Pelton et al, Biomacromolecules 2011, 12, 942-948 recognize the environmental and financial drawback of large doses of TEMPO needed for oxidation in dilute pulp suspensions, and approach it by teaching the use of PVAm to adsorb TEMPO onto the cellulose fibres. Oxidation is thus restricted to the exterior surfaces of the fibres, resulting in lower amounts of TEMPO being consumed.

The above prior art references relate to what may be defined as reactions and processes taking place in low consistency (LC) refining through use of dilute suspensions of consistencies at most 10 wt-%. WO 2012/097446 A1 instead describes a process of making NFC by multipass high consistency (HC) refining of chemical or mechanical fibres. HC is defined as referring to a discharge consistency of more than 20 wt-%

WO 2012/072874 A1 teaches a multistep process of producing NFC, in which cellulose is refined with a first refiner, the product is divided into an accept fraction and reject fraction, water is removed from the accept fraction, and finally the accept fraction is refined with a second refiner to obtain a gel-like product with fibre diameter of 2 to 200 nm. At the first refining step the consistency of the material is under 10 wt-% but increased by removal of water to about 15 wt-% or even 20 wt-% to enhance washing of the same. For the second refining the pulp would be diluted back to a consistency under 10 wt-%.

In WO 2011/114004 there is described a different approach of fibrillating lignocellulosic material based on treatment with ionic liquid, i.e. molten salt, which preserves fibres basically intact. Salts comprising an imidazolium type cation are mentioned as an example of such liquids. The process is said to weaken the binding between fibrils or tracheids and separate fibrils or tracheids from fibre walls.

WO2012/050589 describes treating cellulose raw material in a high consistency with at least one chemical at least partly in an extruder, and optionally performing another refining step in the refining part of the extruder in a consistency of at least 5%.

WO 2012/172170 teaches in broad terms oxidation or light carboxymethylation of cellulosic fibres. According to reference high consistencies of at least 40 wt-%, even 80 to 85 wt-% are preferred.

WO 2007/001229 describes oxidation and mechanical delamination of cellulosic suspension yielding MFC at a single step. Transition metals and optionally initiators, including UV light, are used to promote the process.

A problem with conventional low-consistency refining with hammer or ball mills is that large amounts of energy is consumed for continued fibrillation after the initial phase of the process. Partial hydrolysis of semicrystalline lignocellulose by use of chemicals (e.g. TEMPO) or enzymes is helpful, especially when gel-like MFC products are aimed at, but the main drawback then is high material and energy costs. The use of excess chemicals may also require further chemical recovery solutions to be utilized.

Instead of refining with hammer or ball mills, a microfluidizer or homogenizator may be used. However, the fibrillation process requires pre-treatment of the pulp suspension and a relatively low concentration in order to operate smoothly and energy efficiently.

A common drawback of low consistency fibrillations is that the resulting suspension is dilute, difficult to handle and requires further process steps especially if transporting to another location for being used. On the other hand, high consistency fibrillation has relatively high energy consumption, initial runnability of the refiner is poor, and the known high consistency methods therefore are not economically viable.

In general the problems with the existing methods are poor productivity and difficulty in scaling up the process. For homogenizator-based fibrillation scaling-up would require a multiple set of fibrillation units as well as a consistency enhancer, which further makes the process difficult to scale up.

The known TEMPO-mediated oxidations in particular are uneconomical due to the high chemical cost, and therefore have not won wide practical use so far. Limiting oxidation to the fibre surfaces only, as suggested in the prior art, is not well suited for preparation of gel-like final MFC products.

### Summary of the invention

The problem solved by the invention is to improve oxidative treatment of cellulosic pulp, in particular in the production of MFC, so as to reduce the material costs and turn this route of manufacture economically viable. The goal is also to reduce overall energy consumption, and to obtain oxidized pulp at an increased consistency, which is suitable for being further dried or then transported wet or dry to another location, where it is turned to MFC for use as the final product. A further goal is to obtain a final MFC product in the form of a suspension with an increased viscosity.

The solution according to the invention is production of oxidized cellulose through the steps of (i) providing an aqueous pulp suspension with a consistency in a range of 15 to 30 wt-%, (ii) adding at least one oxidant and at least one mediating catalyst selected from AZADO (azaadamantane-N-oxyl radical) and TEMPO to the suspension, and (iii) oxidizing cellulosic hydroxyl groups under mechanical mixing or shearing of the suspension, to have friction between fibres to open the inner structure of the fibres for catalyzed oxidation. According to the invention a gel-like suspension comprising MFC is obtained by the further step of (iv) subjecting the oxidized suspension from step (iii) to fibrillation, preferably homogenization. Oxidation in relatively high consistency, as defined above, under light and gentle mechanical mixing with low shearing forces improves the fibre structure and homogeneity and reduces formation of fines. The amount of chemicals used is typically lower compared to oxidation in lower consistencies. The mild treatment together with the high consistency avoids cutting of the fibres and is thereby conducive to obtaining MFC with a high aspect ratio. Fibrillation of the oxidized pulp effectively breaks down fibres into individual fibrils and yields a suspension of MFC, which surprisingly was found to have a much increased viscosity as compared to pulp oxidized at a conventional low consistency.

According to the invention an increased consistency enhances shearing of fibres and opens their inner structure so as to produce a uniform oxidation throughout the material. Such disruption brings fibrillation and yields suspensions of increasing transparency, which require very little further fibrillation to obtain MFC as final product. At the same time the amount of the AZADO or TEMPO mediating oxidation catalyst is reduced to a fraction of the dose needed for oxidation at a conventional low consistency.

For improved logistics oxidation may be carried out at the pulp mill where the cellulosic pulp originates, and the resulting oxidized suspension, still at a high consistency, is then transported to another location, e.g. the site of final use of the MFC product, for being washed and fibrillated at a lower consistency to obtain the final product. The oxidized suspension may even be dried for the transport, as it is readily redisperged in water for regenerating the aqueous suspension. The high surface charge density of the fibrils obtained according to this method enhances the re-wettability and dispergation.

Instead of MFC an oxidized suspension at a high consistency may constitute the final product. In other words, the final fibrillation step yielding MFC is not necessary for the invention in its broadest terms. Such suspension of high consistency is useful as a constituent of coating or barrier dispersions for instance.

Instead of homogenization the fibrillation step for producing MFC may be mechanical grinding, fluidization, mechanical fibrillation, extrusion etc., such alternative fibrillation techniques being as such known to a skilled person.

Preferably the consistency of the pulp suspension subjected to oxidation is in the range of 20 to 30 wt- %. Due to drying the consistency may increase in the course of oxidation, which may take several hours.

### Brief description of the figures

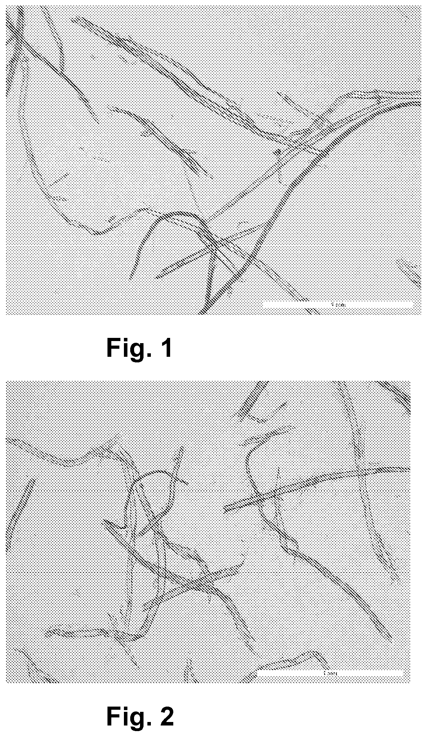

**Figure 1****.** Light microscopy image (2,5x magnification) of example 1 (5 w-% consistency oxidation) after oxidation (before fibrillative treatment). Bar length 1 mm.
**Figure 2****.** Light microscopy image of example 2 (2,5x magnification (20 w-% consistency oxidation) after oxidation (before fibrillative treatment). Clearly more fibrillation of the fibre is seen when compared to example 1. Bar length 1 mm.

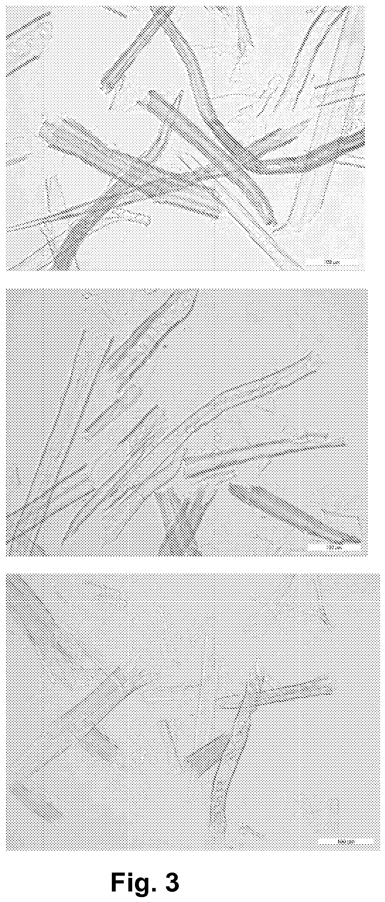

**Figure 3****.** Light microscopy images (10xmagnification) of example 1 (low consistency, 5 w-% oxidation) after a) first, b) second and c) third fluidisation cycle.
Bar length 100 µm.

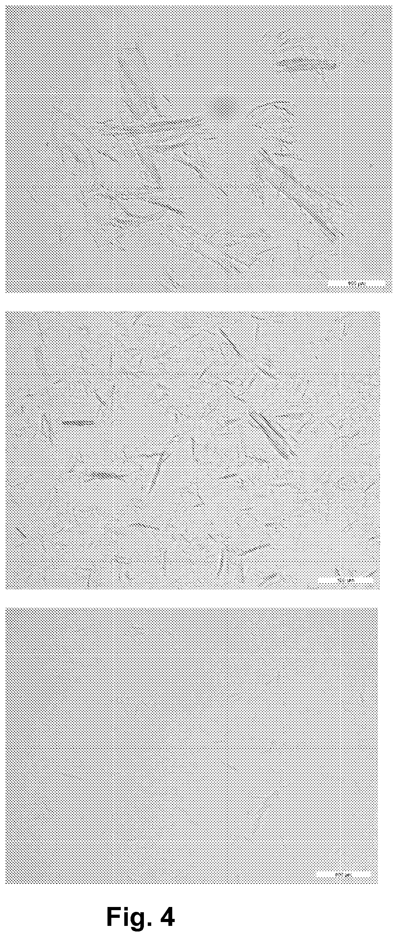

**Figure 4****.** Light microscopy images (10xmagnification) of example 2 after a) first b) second and c) third fluidisation cycle. Bar length 100 µm.

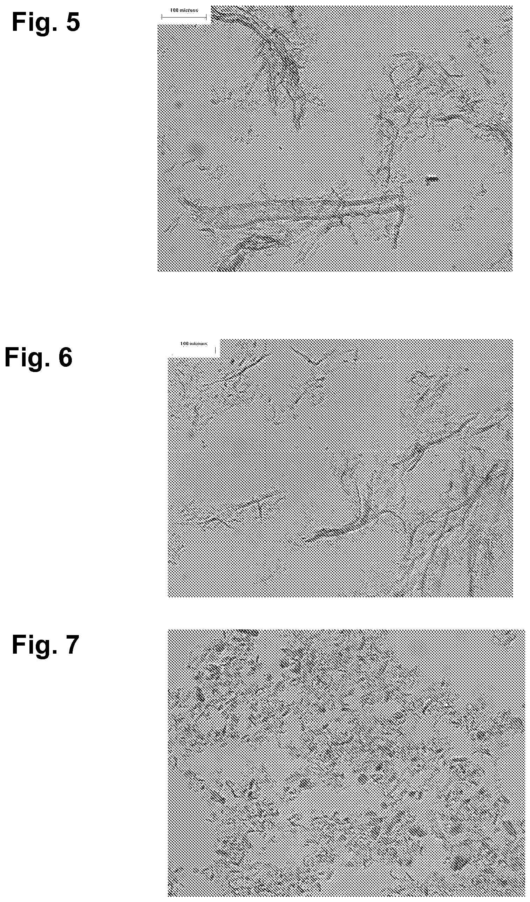

**Figure 5****.** Light microscopy image of example 3 (20 wt-% consistency oxidation) after oxidation and Ultra Turrax treatment. Bar length 100 µm.
**Figure 6****.** Light microscopy image of example 4 (20 wt-% consistency oxidation) after oxidation and Ultra Turrax treatment. Bar length 100 µm.
**Figure 7****.** Light microscopy image of example 5 (20 wt-% consistency oxidation) after oxidation and Ultra Turrax.

### Detailed description

According to the preferred embodiment of the invention microfibrillated cellulose (MFC) is produced by first providing an aqueous cellulosic pulp suspension with a consistency of 15 to 30 wt-%, preferably 20 to 30 wt-%. Preferably the starting cellulosic material has a low lignin content of less than 5 wt-% of lignin of the dry content of the pulp suspension. At least one oxidant and preferably a cocatalyst are added to the suspension and mixed by continued mechanical agitation. Oxidation is then started and carried out by addition of AZADO or TEMPO as a mediating catalyst while mechanical mixing or shearing is continued. The steps so far may be performed at a pulp mill, which produces the starting material, e.g. an undried kraft pulp, which is centrifuged or pressed to the desired high consistency. The oxidized suspension, still at a high consistency, may then be transported to the site of use of the final MFC product, where the pulp is optionally washed and finally homogenized or fibrillated at a lower consistency to obtain the gel-like product.

From increased consistency follows an increase of the mechanical energy that is needed for agitating the suspension. As a parallel phenomenon, it has been shown in the literature that pressure loss and thus consumption of energy in pumping of pulp slurries in a tube grows dramatically as the consistency rises stepwise from 8 by 9, 10, 11, 12, 15 and 16 up to 17 wt-%, on a relative scale from 93 by 95, 100, 115, 150, 320 and 400 up to 525. By implication, at a consistency of about 12 wt-% the mechanical forces start rising, and from 15 wt-% upwards they become very effective for shattering bundles of fibres in a pulp suspension, shearing the fibres and thereby making them susceptible to oxidation. At the same time it will be necessary to keep the mechanical energy at a minimum, so as to achieve gentle shearing and avoid cutting the fibrils, which would otherwise spoil the desired high aspect ratio.

In general terms the oxidation step as carried out in the invention turns part of the hydroxyl groups of the cellulosic hydrocarbon chain (including polysaccharides) into groups typical of oxidized cellulose, such as carboxylic acid, carboxylate, aldehyde and ketone groups, the last two even in hydrated form. To initiate oxidation a mediating catalyst is needed, such catalysts being known to a person skilled in the art. Azaadamantane-N-oxyl (AZADO) and 2,2,6,6-tetramethylpiperidine-1-oxyl (TEMPO) radicals are the oxidation mediating catalysts, which have been tested and found to be useful in the invention.

TEMPO and AZADO catalysts can be used alternatively or together. It is also possible to select the catalyst according to desired properties of the resulting product. AZADO is more powerful but less specific oxidation catalyst when compared to TEMPO. TEMPO catalyst favors oxidation of O6' and thus it is preferred over AZADO when high aspect ratio of fibrils is a wished property.

On the other hand, AZADO oxidation processes can be carried out faster and with less catalyst. Resulting fibrils have a lower aspect ratio than after using TEMPO catalyst. This is a favored property when lower viscosity of the product is desired. The aspect ratio affects the rheological properties, but potentially also the strength of materials, so that higher aspect ratio gives in general higher viscosity and higher strength enhancement.

Instead of TEMPO or AZADO any known derivate thereof with useful catalytic activity may be used, 1-methyl-AZADO being mentioned as an example.

The preferred oxidant for use in the invention is alkali hypochlorite, such as NaClO. Alkali bromide, e.g. NaBr, is suitably added as a cocatalyst. Also chlorine dioxide and chlorite salts can be used either instead or together with hypochlorite.

Additionally, stoichiometric oxidants can also be selected among following chemicals: peroxodisulfate and peroxomonosulfate salts, organic peroxyacids and their salts, perborate salts, percarbonate salts, hydrogen peroxide and organic peroxides, urea peroxide, molecular oxygen and ozone.

Also preferable mixing of different stoichiometric oxidants, e.g. to target specific aldehyde and carboxylate ratios should be noticed.

Beside bromide salts, some other suitable co-catalysts are tungstate salts, vanadate salts, molybdate salts, manganate salts, silver salts, laccase, horseradish peroxidase, copper ligands, manganese ligands, cobalt ligands, tertiary amines and quaternary ammonium salts. It should be noticed that all cocatalyst are not suitable with all stoichiometric oxidants. Tungstate, vanadate, molybdate, manganate salts and horseradish peroxidase are especially suitable with hydrogen peroxide and other peroxide releasing compound, whereas laccase, copper ligands and cobalt ligands are preferable with molecular oxygen.

Optimal temperature and pH are also depending on the practiced oxidation system. Generally, the oxidation is carried out between the ranges of temperature 0 to 80 °C and pH 2 to 14. In specific cases it is beneficial to first mix stoichiometric oxidant and possibly co-oxidant with the pulp at temperature between 0 to 20 °C, and after this start the oxidation by increasing the temperature between 20 to 80 °C and preferably adding the mediator.

The oxidant, the cocatalyst and the mediating catalyst can be added to the pulp suspension in any order. According to one embodiment of this invention an oxidant such as alkali hypochlorite and eventual cocatalyst such as alkali bromide are added to the suspension, followed by addition of the mediating catalyst AZADO or TEMPO. By mixing and shearing the suspension, friction between fibres opens the fibre structure and the oxidant is disperged evenly in the suspension, so as to prepare for a simultaneous attack of the oxidant to the entire material as soon as the mediating catalyst has been added. This is to minimize unwanted side reactions with cellulose already dissolved and target the reactants to enhancing fibrillation only.

Especially as TEMPO is used as the mediating catalyst alkali, such as NaOH, is advantageously added at the oxidation step for setting the pH to a range of 9 to 12, preferably to 10 to 11, and most preferably to about 10.

The oxidized pulp may be washed for removal of the chemicals, in particular AZADO or TEMPO as used, which may bring the pulp suspension to the low consistency range of 10 wt-% or less. The washed and diluted suspension is then subjected to homogenization so as to obtain the final MFC product. Preferably the pulp is homogenized at a consistency of at most 5 wt-%, more preferably in a range of 3 to 4 wt-%. The final MFC production can alternatively be carried out by extruded or (twin-screw) kneader at consistencies at least 10 wt-%, preferably at least 15 wt-%, more preferably between 20 to 30 wt-%. The water-content can also be varied during the treatment by simultaneously adding water in the extruder or kneader to facilitate the fibril hydration and separation.

The pulp used for the invention may be chemical pulp or mechanical, dissolving pulp or recycled pulp, recycled paper or side flows from pulp and paper mills. Even use of cellulosic pulp of non-wood origin, for example bamboo or bagasse is possible. Preferably the pulp is obtained from a chemical kraft pulping process without intermediate drying. Naturally also MFC, nanocellulose or microcrystalline cellulose can be used as a starting material. Starting material can also be composed of various pulp sources. Optionally the pulp may be pretreated in order to increase the surface area. The pulp is first disintegrated mechanically, e.g. by milling, and brought to a consistency of 15 to 30 wt-%. Any known method can be used, e.g. centrifugation or pressing. Preferably the starting cellulosic material has a low lignin content of less than 5 wt-% of lignin of the dry content, preferably less than 3 wt-% lignin of the dry content, more preferably less than 2 wt-% lignin of the dry content. Most preferably the starting cellulosic pulp has very low lignin content of 0.01 to 1 wt-% or even 0.01 to 0.5 wt-% of the mass dry content.

The MFC product obtained by the invention is gel-like and suitably used for regulating viscosity, for production of films, or as an additive for composite materials. At least 50 %, preferably at least 80 % of the fibrils in the product have dimensions in the fibril length and diameter ranges as defined above for MFC.

A particular goal of the invention is to increase the viscosity of a suspension of the final MFC product. A suspension of MFC having a high viscosity is achieved by way of oxidation of an aqueous pulp at a consistency of 15 to 30 wt-% according to the invention, as opposed to lower consistencies as conventionally applied. As a verification, a MFC product obtained in connection with testing the invention was turned to a slurry of a low consistency of about 1 wt-% for measurement of the viscosity. Highly increased viscosities could be measured for the MFC produced according to the invention, as compared to MFC obtained through oxidation at a lower consistency.

As approximated limits, oxidation of pulp at a consistency of 15 wt-% yield aqueous MFC suspensions, which at a consistency of 1 wt-% have viscosities of at least 2500 cp or at least 3500 cp, respectively, as measured at rotation speed of 5 rpm with spindle Vane 71.

The high viscosity obtained by means of the invention is very desirable in view of various uses of the MFC suspension, especially as a thickening agent in cosmetics, foods, personal care products as well as oil drilling slurries, emulsion paints, textile printing pastes and paper coating pastes.

The increased viscosity of the MFC suspension is believed to be due not only to improved separation of fibrils but also to an increased aspect ratio, i.e. the ratio of fibril length to fibril diameter, of the final MFC product. Increased aspect ratio is apt to improve the strength properties of MFC.

For the goal of increasing the viscosity TEMPO catalyst may advantageously be used for oxidizing the cellulose. Even the other options and embodiments of the invention as brought forward in the above equally apply for increasing the viscosity.

### Examples

### Example 1 (comparative). Low-consistency oxidation (cellulose consistency 5 %)

*Preparation of reagent solution:* Sodium bromide (2 g, purity 99%) was dissolved in ion-exchanged water (3000 ml) and after this 148.9 g of aqueous sodium hypochlorite (10 wt-% solution) was added to this solution. The pH of the solution was adjusted to 10.2 with 1 M HCI.

*Mixing of reagent solution with pulp:* 572.7 g of never-dried kraft pulp (35 wt-% consistency) was mixed with the reaction solution and the pulp suspension was mixed with laboratory stirring device for 90 minutes to evenly disperse sodium hypochlorite and sodium bromide with the pulp. The pH of the suspension was maintained at 10.2 with 1 M NaOH.

*TEMPO oxidation:* TEMPO (0.312 g) was dissolved in 278 ml of ion-exchanged water. The solution was added into the pulp suspension and the oxidation reaction was maintained for 90 minutes. Finally, 10 ml ethanol was added to eliminate the unreacted hypochlorite.

### Example 2. High-consistency oxidation (cellulose consistency 20 %)

*Preparation of reagent solution:* Sodium bromide (2 g, purity 99%) and Na₂CO₃ •10 H₂O (28.6 g, purity 98 %) were dissolved in ion-exchanged water (200 ml). The pH of the solution was then adjusted to 10.2 with sodium bicarbonate. This solution was mixed with 148.9 g of aqueous sodium hypochlorite (10 wt-% solution, pH adjusted to 10.2 with 1 M HCI). The final pH was confirmed to be 10.2.

*Mixing of reagent solution with pulp:* 572.7 g of never-dried softwood kraft pulp (35 wt-% consistency) was placed in a dough mixer and the previously described reagent solution was added into pulp. After this the pulp was mixed for 90 minutes to evenly disperse sodium hypochlorite and sodium bromide.

*TEMPO oxidation:* TEMPO (0.312 g) was dissolved in 78 ml of ion-exchanged water. The solution was added into the pulp and the oxidation reaction was maintained for 90 minutes. Finally, 10 ml ethanol was added to eliminate the unreacted hypochlorite.

The resulting fibrous material was washed three times with 2 l of 40 w-% isopropanol solution on a Bühner funnel to remove salts. The cellulose cake was thereafter diluted to 3 wt-% consistency and fibrillated using a fluidizer from Microfluidics Microfluidizer M-110EH-30. The used chambers during the cycles were the following (for cycle 1) first chamber 400 µm and second chamber 200 µm and for (cycles 2 and 3)first chamber 200 µm and second chamber 100 µm.

Brookfield viscosity measurements:
Instrument: Brookfield Rheometer RVDV-III with Vane spindle 71 was used in the measurements. Viscosities were measured at 20°C ± 1°C at consistency of 1 wt-% ± 0.3 wt-%.

Viscosities with five different rotation speeds, 0.5 , 5, 10, 50 and 100 rpm were determined and are shown in Table 1.

**Table 1. Brookfield viscosities.**

| **Spindel (Vane 71) Rotation speed [rpm]** | **Example 1 Viscosity (aver age, 5s) cP** | **Example 2 Viscosity (average, 5s) cP** |
|---|---|---|
| 0.5 | 7703 | 41114 |
| 5 | 1163 | 5705 |
| 10 | 697 | 3241 |
| 50 | 188 | 951 |
| 100 | 110 | 563 |

Example 1 shows clearly lower viscosities with all rotation speeds compared to Example 2. The light microscopy images show that this is due to much poorer fibrillation of the pulp during fluidisation.

### Example 3. High-consistency oxidation with plain sodium hypochlorite (cellulose consistency 20 %, theoretical DS for oxidation 0.2)

*Preparation of reagent solution:* 22.8 g aqueous sodium hypochlorite (10 w-% solution) was diluted with ion-exchanged water (17.7 ml) and the pH of the solution was adjusted to 10.2 with 1 M HCI.

*Mixing of reagent solution with pulp:* 59.5 g never-dried kraft pulp (-42 wt-% consistency) was mixed with the reaction solution and the pulp suspension was mixed with laboratory stirring device for 90 minutes to evenly disperse sodium hypochlorite. After this, 25 ml of sodium bicarbonate /sodium carbonate buffer solution (5 wt-% solution, pH 10.2) was added and the pulp was further mixed another 90 minutes.

Finally the pulp was diluted to 2 wt-% consistency with ion-exchanged water and homogenized with Ultra Turrax device. Clear disruption of fiber structure occurred by this treatment. It should be noticed that Ultra Turrax is a device that cannot produce fibrillar material from conventional untreated pulp fibers.

### Example 4. High-consistency oxidation with sodium hypochlorite and sodium bromide (cellulose consistency 20 %)

*Preparation of reagent solution:* 22.8 g aqueous sodium hypochlorite (10 wt-% solution) was mixed with ion-exchanged water (17.7 ml) containing 0.16 g sodium bromide. The pH of the solution was adjusted to 10.2 with 1 M HCI.

*Mixing of reagent solution with pulp:* 59.5 g never-drid kraft pulp (-42 wt-% consistency) was mixed with the reaction solution and the pulp suspension was mixed with laboratory stirring device for 90 minutes to evenly disperse sodium hypochlorite and sodium. After this, 25 ml of sodium bicarbonate /sodium carbonate buffer solution (5 w-% solution, pH 10.2) was added and the pulp was further mixed another 90 minutes.

Finally the pulp was diluted to 2 % consistency with ion-exchanged water and homogenized with Ultra Turrax device. Clear disruption of fiber structure occurred by this treatment.

### Example 5. High-consistency oxidation with sodium hypochlorite and sodium bromide (cellulose consistency 20 %)

*Preparation of reagent solution:* 137 g aqueous sodium hypochlorite (10 wt-% solution) was mixed with ion-exchanged water (25 ml) containing 0.16 g sodium bromide. The pH of the solution was adjusted to 10.2 with 1 M HCI.

*Mixing of reagent solution with pulp:* 238 g never-drid kraft pulp (-42 wt-% consistency) was mixed with the reaction solution and the pulp suspension was mixed with Hobart pulper for 90 minutes to evenly disperse sodium hypochlorite and sodium. After this, 95 ml of sodium bicarbonate /sodium carbonate buffer solution (5 wt-% solution, pH 10.2) was added and the pulp was further mixed another 90 minutes.

Finally the pulp was diluted to 2 wt-% consistency with ion-exchanged water and homogenized with Ultra Turrax device. A complete disruption of fiber structure occurred by this treatment.

### Example 6. Brookfield viscosity

Brookfield viscosity measurements for samples of Examples 3, 4 and 5 were as follows:
*Instrument:* Brookfield Rheometer RVDV-III with Vane spindle 71 was used in the measurements. Viscosities were measured at 20°C ± 1°C at consistency of 1.5 wt-% ± 0.3 wt-%.

Viscosities with two different rotation speeds 10 and 100 rpm were determined and are shown in Table 2.

**Table 2. Brookfield viscosities of examples 3, 4 and 5 at 1.5 % consistency.**

| **Spindel (Vane 71) Rotation speed [rpm]** | **Example 3 Viscosity (aver age, 5s) cP** | **Example 4 Viscosity (aver age, 5s) cP** | **Example 5 Viscosity (average, 5s) cP** |
|---|---|---|---|
| 10 | 2760 | 3780 | 2407 |
| 100 | 590 | 750 | 521 |

## Claims

1. A method of producing oxidized cellulose comprising the steps of:
(a) providing an aqueous pulp suspension with a consistency in a range of 15 to 30 wt-%,
(b) adding at least one oxidant and at least one mediating catalyst selected from AZADO and TEMPO to the suspension, and
(c) oxidizing cellulosic hydroxyl groups under mechanical mixing or shearing of the suspension, to have friction between fibres to open the inner structure of the fibres for catalyzed oxidation.

2. The method of claim 1, wherein the aqueous pulp suspension has lignin content of less than 5 wt-%, preferably in a range of 0.01 to 1 wt-%, from the dry solids of the mass.

3. The method of claim 1 or 2, wherein the oxidized suspension from step (c) is subjected to fibrillation to yield a gel-like suspension comprising micro fibrillated cellulose (MFC).

4. The method of claim 3, wherein said fibrillation is homogenization.

5. The method of any of claims 1 to 4, wherein the consistency of the suspension at step (a) is 20 to 30 wt-%.

6. The method of any one of claims 1 to 5, wherein the oxidant is alkali hypochlorite.

7. The method of any one of claims 1 to 5, wherein alkali bromide is added as a cocatalyst.

8. The method of any one of claims 1 to 7, wherein alkali hypochlorite and alkali bromide are first added to the suspension, followed by addition of AZADO or TEMPO or a combination thereof.

9. The method of any one of the preceding claims, wherein the oxidized suspension is washed and then subjected to fibrillation at a reduced consistency.

10. The method of claim 9, wherein the suspension is fibrillated at a consistency of at most 5 %, preferably in a range of 3 to 4 %.

11. The method of any one of the preceding claims, wherein the cellulosic pulp for step (a) is obtained from a kraft pulping process without intermediate drying.

12. The method of claim 11, wherein the kraft pulp is disintegrated mechanically and brought to a consistency of at least 15 %, by centrifugation or pressing.

13. The method of any of claims 1 to 8 wherein the oxidized suspension is optionally washed and then subjected to fibrillation at a consistency of at least 10 wt-%.

14. A method of increasing the viscosity of a suspension of a microfibrillated cellulose (MFC) product, wherein the MFC is produced by a process comprising the steps of:
(a) providing an aqueous pulp suspension with a consistency in a range of 15 to 30 wt-%,
(b) adding at least one oxidant and at least one mediating catalyst selected from AZADO and TEMPO to the suspension,
(c) oxidizing cellulosic hydroxyl groups under mechanical mixing or shearing of the suspension, to have friction between fibres to open the inner structure of the fibres for catalyzed oxidation, and
(d) subjecting the suspension obtained at step (c) to fibrillation to yield a gel-like suspension comprising MFC.

## Patentansprüche

1. Verfahren zur Herstellung von oxidierter Cellulose, umfassend die folgenden Schritte:
(a) Bereitstellen einer wässrigen Pulpensuspension mit einer Konsistenz in einem Bereich von 15 bis 30 Gew.-%,
(b) Zugeben von wenigstens einem Oxidationsmittel und wenigstens einem vermittelnden Katalysator, ausgewählt aus AZADO und TEMPO, zu der Suspension, und
(c) Oxidieren der cellulosischen Hydroxylgruppen unter mechanischem Mischen oder Scheren der Suspension, um eine Reibung zwischen den Fasern zu erzielen, um die innere Struktur der Fasern für eine katalysierte Oxidation zu öffnen.

2. Verfahren nach Anspruch 1, wobei die wässrige Pulpensuspension einen Ligningehalt von weniger als 5 Gew.-%, vorzugsweise in einem Bereich von 0,01 bis 1 Gew.-%, bezogen auf die trockenen Feststoffe der Masse, umfasst.

3. Verfahren nach Anspruch 1 oder 2, wobei die oxidierte Suspension aus Schritt (c) einer Fibrillierung unterzogen wird, um eine gelartige Suspension zu gewinnen, die mikrofibrillierte Cellulose (MFC) umfasst.

4. Verfahren nach Anspruch 3, wobei die Fibrillierung eine Homogenisierung ist.

5. Verfahren nach einem der Ansprüche 1 bis 4, wobei die Konsistenz der Suspension im Schritt (a) 20 bis 30 Gew.-% ist.

6. Verfahren nach einem der Ansprüche 1 bis 5, wobei das Oxidationsmittel Alkalihypochlorit ist.

7. Verfahren nach einem der Ansprüche 1 bis 5, wobei Alkalibromid als Co-Katalysator zugegeben wird.

8. Verfahren nach einem der Ansprüche 1 bis 7, wobei Alkalihypochlorit und Alkalibromid zuerst zu der Suspension zugegeben werden, gefolgt von der Zugabe von AZADO oder TEMPO oder einer Kombination davon.

9. Verfahren nach einem der vorhergehenden Ansprüche, wobei die oxidierte Suspension gewaschen wird und anschließend der Fibrillierung bei reduzierter Konsistenz unterzogen wird.

10. Verfahren nach Anspruch 9, wobei die Suspension bei einer Konsistenz von höchstens 5 %, vorzugsweise in einem Bereich von 3 bis 4 %, fibrilliert wird.

11. Verfahren nach einem der vorhergehenden Ansprüche, wobei die Cellulosepulpe für Schritt (a) aus einem Kraftaufschlussprozess ohne Zwischentrocknen erhalten wird.

12. Verfahren nach Anspruch 11, wobei die Kraft-Pulpe mechanisch zersetzt wird und durch Zentrifugieren oder Pressen auf eine Konsistenz von wenigstens 15 % gebracht wird.

13. Verfahren nach einem der Ansprüche 1 bis 8, wobei die oxidierte Suspension optional gewaschen wird und anschließend bei einer Konsistenz von wenigstens 10 Gew.-% einer Fibrillierung unterzogen wird.

14. Verfahren zur Erhöhung der Viskosität einer Suspension eines mikrofibrillierten Celluloseprodukts (MFC), wobei die MFC durch einen Prozess hergestellt wird, der die folgenden Schritte umfasst:
(a) Bereitstellen einer wässrigen Pulpensuspension mit einer Konsistenz in einem Bereich von 15 bis 30 Gew.-%,
(b) Zugeben von wenigstens einem Oxidationsmittel und wenigstens einem vermittelnden Katalysator, ausgewählt aus AZADO und TEMPO, zu der Suspension, und
(c) Oxidieren der cellulosischen Hydroxylgruppen unter mechanischem Mischen oder Scheren der Suspension, um eine Reibung zwischen den Fasern zu erzielen, um die innere Struktur der Fasern für eine katalysierte Oxidation zu öffnen, und
(d) Unterziehen der in Schritt (c) erhaltenen Suspension einer Fibrillierung, um eine gelartige Suspension zu gewinnen, die MFC umfasst.

## Revendications

1. Procédé de production de cellulose oxydée comprenant les étapes de :
(a) fourniture d'une suspension de pâte aqueuse avec une consistance dans une plage de 15 à 30 % en poids,
(b) addition d'au moins un oxydant et d'au moins un catalyseur de médiation choisi parmi AZADO et TEMPO à la suspension, et
(c) oxydation des groupes hydroxyle cellulosiques sous mélange mécanique ou cisaillement de la suspension, pour avoir un frottement entre les fibres pour ouvrir la structure interne des fibres pour l'oxydation catalysée.

2. Procédé selon la revendication 1, dans lequel la suspension de pâte aqueuse a une teneur en lignine de moins de 5 % en poids, de préférence dans une plage de 0,01 à 1 % en poids, à partir des solides secs de la masse.

3. Procédé selon la revendication 1 ou 2, dans lequel la suspension oxydée de l'étape (c) est soumise à une fibrillation pour donner une suspension de type gel comprenant la cellulose microfibrillée (MFC).

4. Procédé selon la revendication 3, dans lequel ladite fibrillation est une homogénéisation.

5. Procédé selon l'une quelconque des revendications 1 à 4, dans lequel la consistance de la suspension à l'étape (a) est de 20 à 30 % en poids.

6. Procédé selon l'une quelconque des revendications 1 à 5, dans lequel l'oxydant est l'hypochlorite alcalin.

7. Procédé selon l'une quelconque des revendications 1 à 5, dans lequel du bromure alcalin est ajouté comme cocatalyseur.

8. Procédé selon l'une quelconque des revendications 1 à 7, dans lequel l'hypochlorite alcalin et le bromure alcalin sont ajoutés en premier à la suspension, suivis par l'addition d'AZADO ou de TEMPO ou d'une de leurs combinaisons.

9. Procédé selon l'une quelconque des revendications précédentes, dans lequel la suspension oxydée est lavée puis soumise à une fibrillation à une consistance réduite.

10. Procédé selon la revendication 9, dans lequel la suspension est fibrillée à une consistance d'au plus 5 %, de préférence dans une plage de 3 à 4 %.

11. Procédé selon l'une quelconque des revendications précédentes, dans lequel la pâte cellulosique pour l'étape (a) est obtenue à partir d'un procédé de pâte kraft sans séchage intermédiaire.

12. Procédé selon la revendication 11, dans lequel la pâte kraft est désintégrée mécaniquement et portée à une consistance d'au moins 15 % par centrifugation ou pressage.

13. Procédé selon l'une quelconque des revendications 1 à 8 dans lequel la suspension oxydée est éventuellement lavée puis soumise à une fibrillation à une consistance d'au moins 10 % en poids.

14. Procédé d'augmentation de la viscosité d'un produit de cellulose microfibrillée (MFC), dans lequel la MFC est produite par un procédé comprenant les étapes de :
(a) fourniture d'une suspension de pâte aqueuse avec une consistance dans une plage de 15 à 30 % en poids,
(b) addition d'au moins un oxydant et d'au moins un catalyseur de médiation choisi parmi AZADO et TEMPO à la suspension,
(c) oxydation des groupes hydroxyle cellulosiques sous mélange mécanique ou cisaillement de la suspension, pour avoir un frottement entre les fibres pour ouvrir la structure interne des fibres pour l'oxydation catalysée, et
(d) la soumission de la suspension obtenue à l'étape (c) à une fibrillation pour donner une suspension de type gel comprenant la MFC.
